# EUROPEAN PATENT APPLICATION

(11) **EP 1 677 042 A1**
(43) Date of publication of application: **05.07.2006**
(21) Application number: 05112333.9
(22) Date of filing: 16.12.2005
(51) Int. Cl.: F16L 37/14

(54) **Fluid quick connector with wire retainer**

(30) Priority: 30.12.2004 US 26203
(71) Applicant: ITT MANUFACTURING ENTERPRISES, INC., Wilmington, Delaware 19801 (US)
(72) Inventor: Walker, Daniel H., 48320, Sylvan Lake (US); Sato, Masatomi, Ibaraqi (JP); Okada, Hiroyuki, Saitama (JP)
(74) Representative: Dreiss, Fuhlendorf, Steimle & Becker

(57) **Abstract**

A fluid quick connector (30) includes a housing (32) and a sleeve (40) movable between first and second positions within the housing (32) upon engagement with an endform (20) inserted into the housing (32). A retainer (42) mounted on the housing (32) includes at least one radially inward extending protrusion which extends through an aperture (60) in the housing (32) into engagement with the endform (20) to latch the endform (20) in the housing (32). The sleeve (40), when in the first position, blocks extension of the protrusion through the aperture (60) in the housing (32) to allow insertion of the endform (20) in the housing. Movement of the sleeve (40) to the second position allows the retainer (42) to retract moving the protrusion through the aperture (60) in the housing (32) into engagement with the endform (20).

## Description

### BACKGROUND

The present invention relates, in general, to fluid quick connectors which couple fluid components.

Snap-fit or quick connectors are employed in a wide range of applications, such as joining fluid carrying conduits in automotive and industrial application. Such quick connectors utilize retainers or locking elements for securing one connector component, such as a tubular conduit or endform, within a complimentary bore of another connector component or housing.

Wire retainers are known. Wire retainers typically have a plurality of projections or legs, which extend, literally across the bore in the quick connector housing. The wire retainers allow insertion of the enlarged flange or bead on the endform past the retainer and into a fully sealed position in the bore in the connector housing. The spaced projections or legs of the retainer snap back to their original nominal shape or position behind the flange on the end form to latch the endform in the housing.

Quick connectors which have low insertion forces and high pull out forces are favored by customers for ease of assembly and reliable, long term connection. Forcing the known wire retainers outward during insertion of the endform into the housing requires a relatively high amount of insertion force.

It would be desirable to provide an improved fluid quick connector which has a low insertion force and a high pull out retention force.

### SUMMARY

The present invention is a fluid quick connector with a wire retainer. In one aspect, the fluid quick connector includes an endform having a shoulder. A housing has a bore extending from one end which receives the endform through the one end. At least one aperture is formed in the housing opening to the bore. The retainer has at least one protrusion extendable through the aperture in the housing into engagement with the shoulder of the endform to latch the endform in the housing. A sleeve, such as a top hat, is movably mounted in the bore of the housing for movement between a first position and a second position in response to engagement with an endform during insertion of the endform through the one end of the housing. In the first position, the sleeve extends past the at least one aperture of the housing to expand the diameter of the retainer radially outward to enable insertion of the endform into the bore in the housing. In the second position, the sleeve is spaced from the at least one aperture in the housing allowing the at least one protrusion in the retainer to move through the at least one aperture to engage the shoulder and the endform to latch the endform in the housing.

In one aspect, the shoulder on the endform is a radially enlarged flange. In another aspect, the shoulder is a recessed groove.

In one aspect, the sleeve has a through bore with an enlarged diameter recess at one end. The recess receives the enlarged diameter flange on the endform, in one aspect of the invention, such that continued insertion of the endform into the bore in the housing axially moves the sleeve or top hat from the first position to the second position.

The fluid quick connector with wire retainer of the present invention has a low insertion force since the sleeve or top hat holds the retainer in an expanded diameter position allowing free, unimpeded passage of the endform into the bore in the housing into a fully sealed position within the housing. Only when the endform is in the fully sealed position in the housing, is the retainer released for latching engagement with the endform. At the same time, the retainer provides the requisite high pull-out force resistance to maintain the endform in a latched position within the housing.

### BRIEF DESCRIPTION OF THE DRAWING

The various features, advantages, and other uses of the present invention will become more apparent by referring to the following detailed description and drawing in which:
- Fig. 1: is an exploded, perspective view of a fluid quick connector according to one aspect of the present invention;
- Fig. 2: is an enlarged, right end, perspective view of the top hat shown in Fig. 1;
- Fig. 3: is a partially exploded, perspective view of the assembled quick connector housing, retainer, and seal elements, with the endform disposed in a pre-installation position relative to the housing;
- Fig. 4: is a longitudinal cross-section of the exploded quick connector and endform shown in Fig. 3 in a preassembled position;
- Fig. 5: is a perspective view of the retainer of the first aspect of the quick connector shown in Fig. 1, depicted in a pre-endform installation position;
- Fig. 6: is a perspective view of the assembled quick connector and endform shown in Fig. 1;
- Fig. 7: is a longitudinal cross-sectional view of the assembled quick connector and endform shown in Fig. 6 in an assembled position;
- Fig. 8: is an enlarged, perspective view of the retainer shown in Figs. 6 and 7, in a post-endform installed position;
- Fig. 9: is a right hand end view of the assembled quick connector shown in Fig. 6;
- Fig.10A: is a right hand end view of a modified endform usable in the first aspect of the invention shown in Fig. 1-9;
- Fig. 10B: is a perspective view of the modified endform shown in Fig. 10A;
- Fig. 11: is a side elevational view of a quick connector according to another aspect of the present invention shown in a pre-endform installed state;
- Fig. 12: is a longitudinal cross-sectional view, generally taken along line 12-12 in Fig.11;
- Fig. 13: is a right hand end view of the quick connector shown in Fig. 11;
- Fig. 14: is an enlarged, side elevational view of the top hat shown in Fig. 12;
- Fig. 15: is a plane elevational view of the top hat shown in Fig. 12, rotated ninety degrees from the orientation shown in Fig.14; and
- Fig. 16: is an enlarged, perspective view of the retainer shown in Figs. 11-13.

### DETAILED DESCRIPTION

Before describing the various aspects of the fluid quick connector of the present invention, a brief explanation of the general use of fluid quick connectors will be provided for clarity in understanding the features and advantages of the present invention.

The following description of the use of the fluid quick connector of the present invention to connect tubular members will be understood to apply to the connection of conduits, hoses, and/or metal or plastic tubes to each other in fluid flow communication. The end of a conduit, tubular member or fluid use component inserted into the interior of one end of the quick connector is defined herein as an endform. The endform can be a separate member which receives a separate hose or conduit at one end, or a shape integrally formed on the end of an elongated metal or plastic tube. Further, the endform can be integrally formed on or mounted as a separate element on a fluid use device, such as a pump, filter, valve, manifold, etc.

All of the aspects of a fluid quick connector constructed in accordance with the teaching of the present invention employ a housing and a retainer which are used to fluidically couple fluid operative elements, such as, pumps, valves, manifolds, etc., as well as individual tubes, hoses, etc.

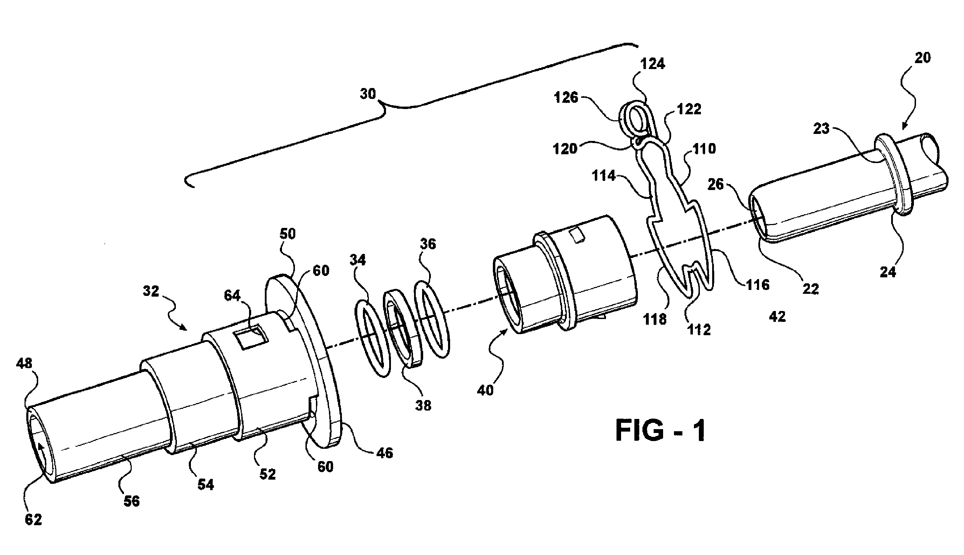

Thus, shown in Figs. 1 and 3-7, an endform 20 has a generally cylindrical shape with a tip end 22 and a radially enlarged bead or flange 24 spaced from the tip end 22. The flange 24 forms a shoulder 23 at the juncture with the tubular surface of the endform 20. A bore 26 extends through the endform 20 from the first end 22.

A fluid quick connector 30 is depicted in Figs. 1 and 3-7, in accordance with one aspect of the present invention. The quick connector 30 includes a housing 32, seal means, such as, for example only, at least one or two O-rings 34 and 36 which are axially separated by an interposed rigid annular spacer 38, a sleeve or top hat 40, and a retainer 42.

The housing 32 was formed by a suitable material, such as metal, plastic, with polyphthalamide (PPA) being used by way of example only. The housing 32 has a generally cylindrical shape with a stepped exterior surface extending from a first end 46 to an opposed second end 48. The housing 32 may have a generally linear shape between the ends 46 and 48 or an angular shape, such a 90E elbow.

The housing 32 has an enlarged diameter flange 50 at the first end 48. A reduced diameter first exterior portion 52 extends axially from one side of the enlarged flange 50 to a further reduced diameter, second exterior portion 54. A yet smaller diameter third exterior portion 56 extends from one end of the exterior second portion 54. At least one end preferably a plurality of apertures 60 are formed in the first exterior portion 52 of the housing 32 adjacent to the flange 50. The apertures 60 open to an internal bore 62 extending between the first and second ends 46 and 48 of the housing 32.

At least one end, by example only, two diametrically opposed windows 64 are also formed in the first exterior portion 52 of the housing 32 and also open to the interior bore 62 in the housing 32.

Although not shown in Fig. 1, the third exterior portion 56 of the housing 32 functions as a mounting or connection surface to an external fluid use or operative component, such a tube, hose, conduit, etc.. Such external components can be attached to the third portion 56 of the housing 32 by means of axially spaced barbs formed on the third exterior portion 56, spin welding, etc.

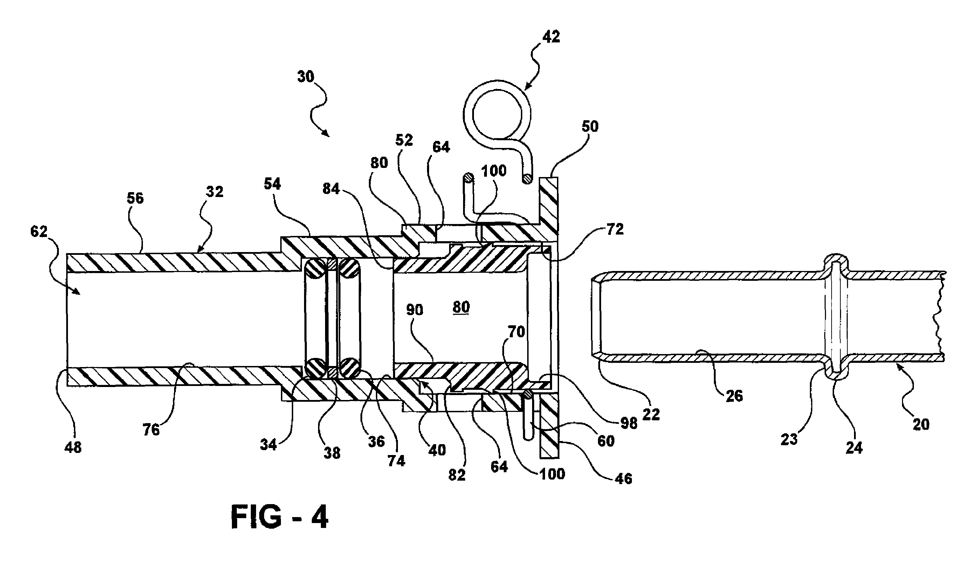

As shown in Fig. 4, the bore 62 extending between the first and second end 46 and 48 of the housing 32 has a stepped configuration, generally similar to the stepped configuration of the external surface of the housing 32. Thus, the bore 62 includes a first largest diameter bore portion 70 extending from an open end 72 at the first end 46 of the housing 32. The bore 62 transitions form the first largest diameter bore portion 72 to an intermediate, smaller diameter bore portion 74. A third yet smaller diameter bore portion 76 extends from the intermediate bore portion 74 to the second end 48 of the housing 32.

As shown in Fig. 4, the transition between the second and third bore portions 74 and 76 forms a shoulder which acts as a seat for the stacked arrangement of the O-rings 34 and 36 and the spacer 38.

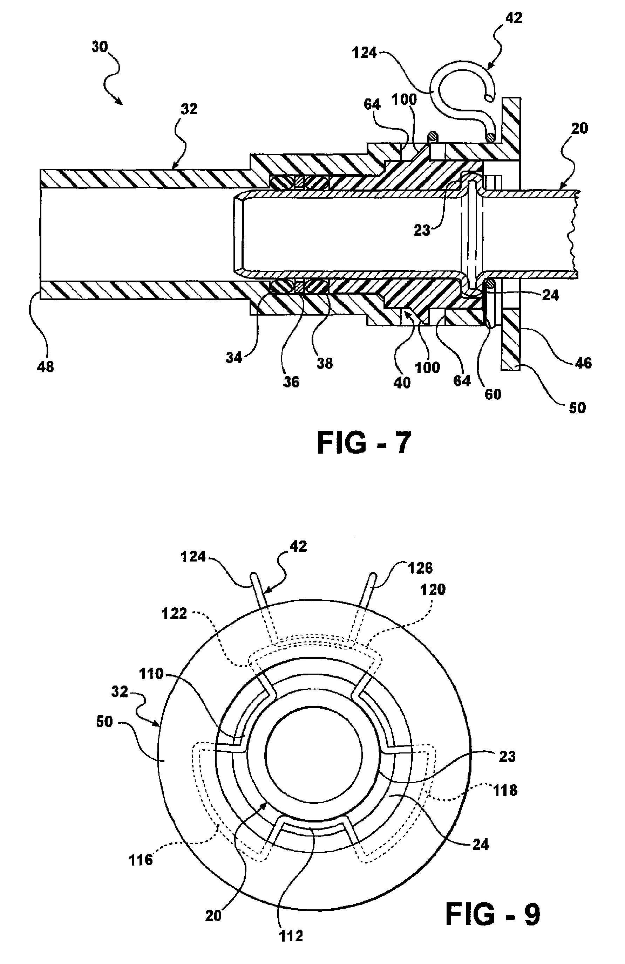

As shown in Figs. 4 and 7, the first and second bore portions 70 and 74 have a sufficient length to allow axial movement of the top hat 40 between first and second positions which will be described in greater detail hereafter. The transition between the first bore portion 70 to the second bore portion 74 forms a shoulder 80 which acts as a limit stop when engaged by a projection 82 on the top hat 40 to limit axial movement of the top hat 40 at a position in which a second end 84 of the top hat 40 may forcibly engage and apply compressive force to the O-ring 36 causing sealing expansion of the O-rings 34 and 36 between the inner surface of the second bore portion 74 of the housing 32 and the outer surface of the endform 20.

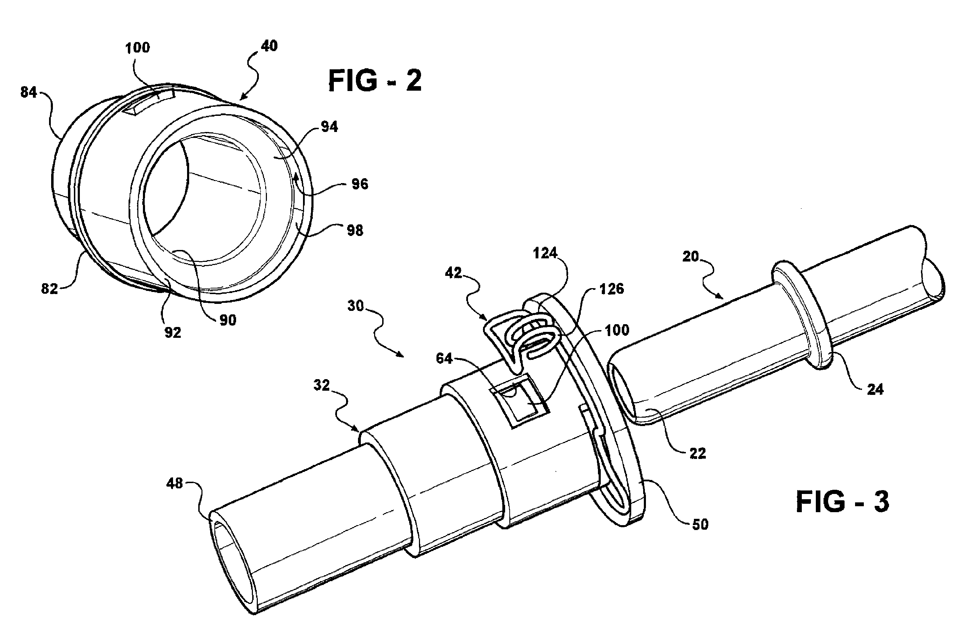

As shown in Figs. 2 and 4, the top hat 40 which may be formed of a suitable rigid material, such as polyphthalamide (PPA), by example only, has a generally sleeve like or cylindrical shape with an internal bore 90 extending between a first end 92 and the second end 84. A shoulder 90 is formed within the interior of the top hat 40 spaced from the first end 92 to define an annular recess 96 extending from the first end 92. The recess 96 has a slightly larger diameter than the diameter of the bore 90. The recess 96 and the shoulder 94 form an annular lip 98 extending axially from the end 92 to the shoulder 94.

The diameter of the recess 96 is sized to receive the enlarged flange 24 on the endform 20 when the endform 20 is fully inserted into the bore 62 in the housing 32 such that the end portion of the end form 20 extending from the tip end 22 is sealingly supported within the third bore portion 76 by the O-rings 34 and 36, the spacer 38, and the top hat 40.

At least one projection 100, with two diametrically opposed projections 100 shown by example only, are formed externally on the top hat 40 between the first end 92 and the annular projection 82. The projections 100 slide within windows or apertures 64 in the first exterior portion 52 of the housing 32 to limit axial movement of the top hat 40 at a first position with respect to the first end 46 of the housing 32 as shown in Fig. 4.

As described above, the top hat 40 is movably mounted in the bore 62 of the housing 32 for movement between a first position shown in Fig. 4 and a second position shown in Fig. 7 in response to engagement with the endform 20 during insertion of the endform 20 into the bore 62 in the housing 32.

Although frictional contact between the end portion of the endform 20 and the interior surface of the bore 90 in the top hat 40 could cause axial movement of the top hat 40 from the first position to the second position, movement of the top hat 40 is enhanced by engagement of the flange 24 on the endform 20 with the shoulder 94 in the top hat 40. Continued insertion of the end form 20 into the bore 62 in the housing 32 will axially move the top hat 40 from the first position shown in Fig. 4 to the second position shown in Fig. 7.

As shown in Figs. 1 and 3-9, the retainer 42, in one aspect of the invention, is in the form of a spring element formed of spring material, such as metal, i.e., stainless steel. The retainer 42 has an irregular, ring-like shape with at least one and preferably two, three, or more radially inward extending projections or protrusions, with three projections 110, 112, and 114 shown by way of example only. The projections 110, 112, and 114 are joined by radially outer connecting segments 116, 118, 120, and 122. All of the projections 110, 112, and 114 and the connecting segments 116, 118, 120, and 122 generally lie in a common, single plane. In the relaxed, nominal state shown in Fig. 8, the radially inner projections 110, 112, and 114 are spaced apart by a distance corresponding approximately to the outer diameter of the tubular portion of the endform 20. This diameter is smaller than the outer diameter of the flange or bead 24 on the endform 20.

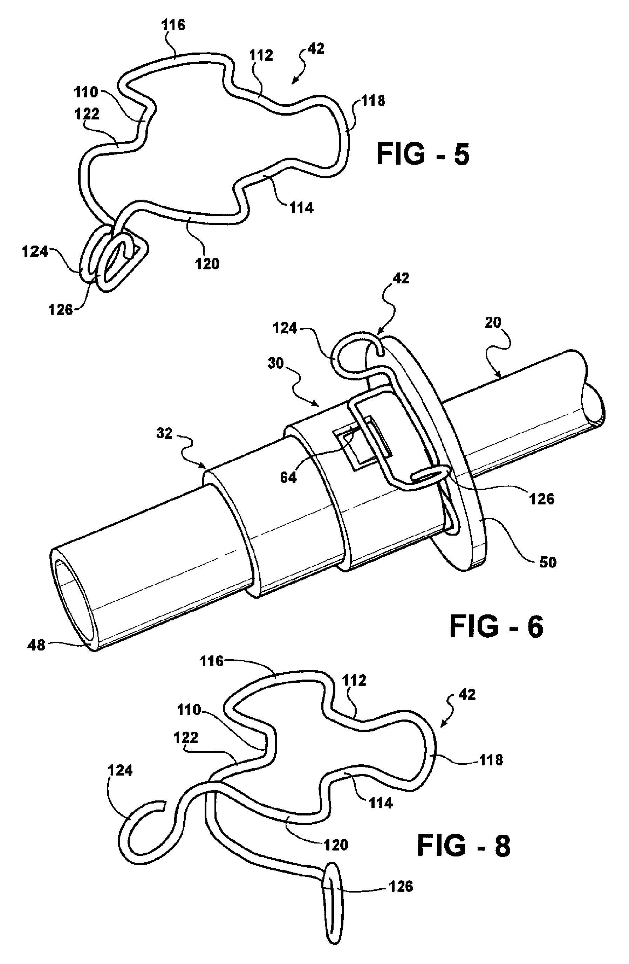

The connecting segments 120 and 122 terminate in engagement members 124 and 126. By way of example only, in this aspect of the invention, the engagement members 124 and 126 are in the form of loops which are bent out of the plane containing the projections 110, 112, and 114 and the connecting segments 116, 118, 120, and 122. The loops or engagement members 124 and 126 are movably spaced apart. As shown in the pre-endform position in Fig. 5, the engagement members 124 and 126 are closely spaced.

Referring briefly to Fig. 4, prior to insertion of the endform 20 into the bore 62 of the housing 32, the top hat 40 is in the first position described above. In this first position, the lip 98 extends axially across the one or more apertures 60 in the housing 32. When the retainer is mounted on the first exterior portion 52 of the housing 32, the lip 98 forces the radially inner projections 110, 112, and 114 of the retainer 42, to a radially expanded position shown in Fig. 5. In this expanded position, the inner diameter or spacing between the projections 110, 112, and 114 is larger than the outer diameter of the flange 24 on the endform 20 allowing free, unimpeded insertion or passage of the flange 24 passed the projections 110, 112, and 114 into full sealing engagement with the seals 34 and 36 in the housing 32. As described above, engagement of the endform 20 with the top hat 42, and particularly, engagement of the flange 24 on the endform 20 with the shoulder 94 in the top hat 40, causes axial sliding movement of the top hat 40 to the second position shown in Fig. 7. This axial movement causes the annular lip 98 on the top hat 40 to move past the one or more apertures 60 in the housing 32 thereby enabling the internal spring force of the expanded retainer 42 to radially inwardly retract the retainer 42 to its nominal shape shown in Fig. 8. In this position, as described above, the projections, 110, 112, and 114 are disposed closely adjacent to or in contact with the longitudinal exterior surface of the endform 20 and/or the flange 24 to latch the endform 20 in the housing 32.

As also shown in Fig. 8, during the radially inward retraction of the retainer 42 from the expanded shape shown in Fig. 5 to the retracted or nominal shape shown in Fig. 8, the engagement members 124 and 126 move further apart.

In the retracted position shown in Fig. 8, the engagement members 124 and 126 may be engaged by a tool or fingers and squeezed together to the spacing shown in Fig. 5 to cause the retainer 42 to expand radially outward sufficiently to enable the endform 20 to be separated from the housing 32.

During such separation, frictional forces between the endform 20 and the top hat 40 will result in axial movement of the top hat 40 from the second position shown in Fig. 7 back to the first position shown in Fig. 4. The squeezing force on the engagement members 124 and 126 of the retainer 42 can then be released since the lip 98 on the top hat 40 is now disposed across the aperture(s) 60 in the housing 32 to prevent retraction of the retainer 42 to the radially inward position shown in Fig. 5 and to retain the retainer 42 in an expanded position for the next insertion of the endform 20 into the housing 32.

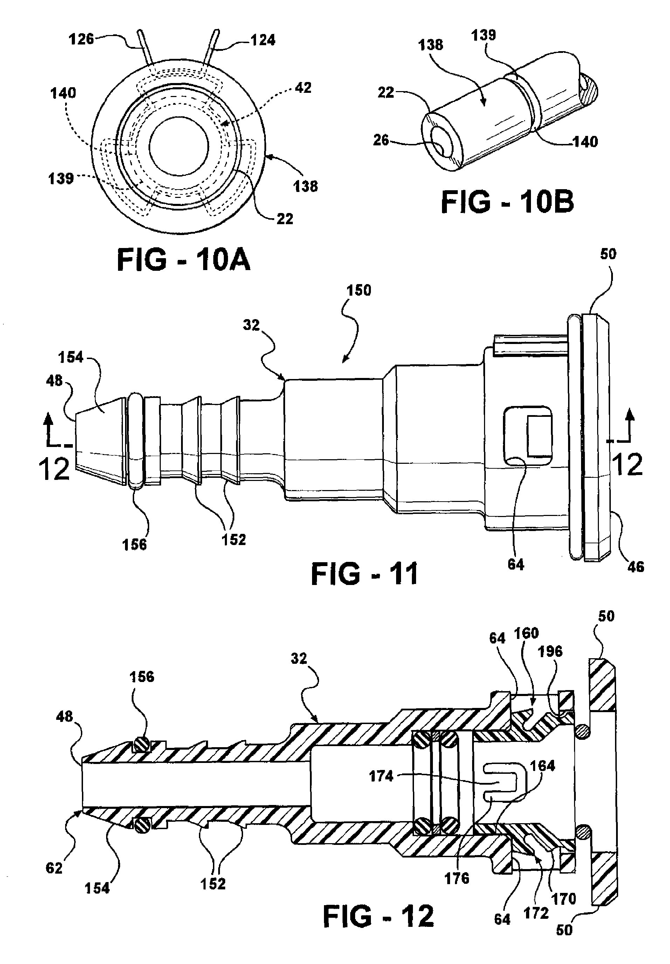

Instead of the enlarged flange or bead 24, the endform 138 may have a radially inward extending groove or recess 139 as shown in Figs. 10A and 10B which forms a shoulder 140. When the endform 138 is used with the housing 32, the radially inward extending projections 110, 112, and 114 of the retainer 42 will engage the shoulder 140 in the recess 139 when in the latched position to releasably latch the endform 138 when in the housing 32. Otherwise, operation of the retainer 42 is the same as when used with the endform 20.

Another aspect of a fluid quick connector 150 according to the present i n-vention as shown in Figs. 11-16. In this aspect, the fluid quick connector 150 includes a housing 32 identical to housing 32 described above. The housing 32 includes an external stepped cylindrical shape and an internally stepped bore 62, as also described above.

By way of example only in Figs. 11 and 12, a plurality of external, annular barbs 152 are formed on the end portion of the housing 32 for attaching a flexible hose or conduit , not shown, to the housing 32. A conical, ramp surface 154 extends from the second end 48 of the housing 32 to provide a lead-in for insertion of the end 48 of the housing 32 into a flexible hose or conduit. An O-ring seal 156 can be mounted on an annular groove at one end of the lead-in ramp surface 154 to provide sealing between the housing 32 and the attached hose or conduit.

Otherwise, the housing 32 is the same as that described above in the first aspect of the invention in that the housing 32 includes an enlarged flange 50 at a first end 46, at least one and preferably a plurality of arcuate apertures 60 adjacent to the flange 50, and at least one, or two or more windows 64.

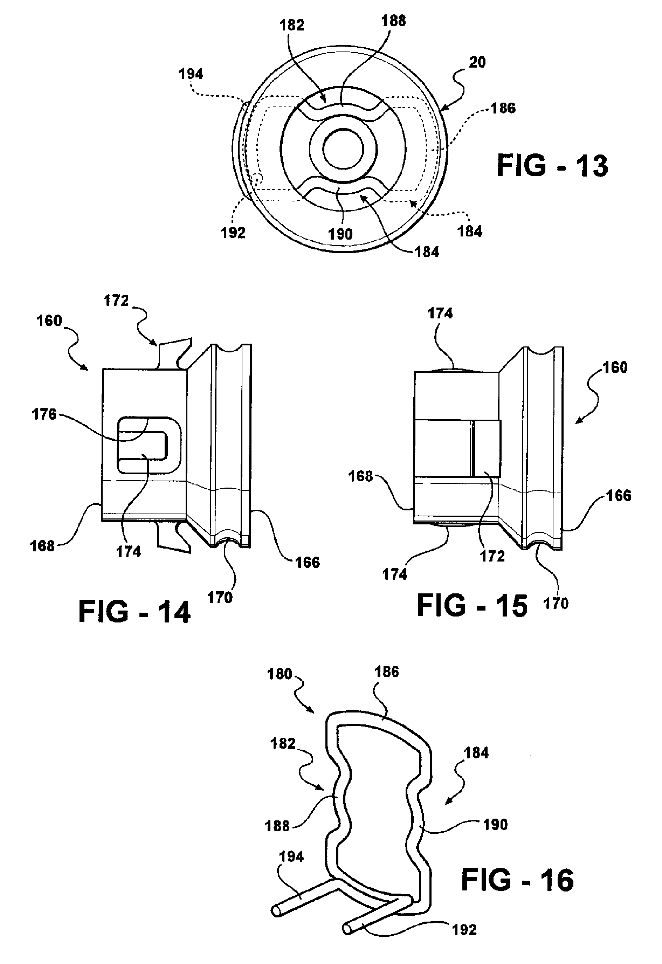

The quick connector 150 includes a top hat 160, shown in greater detail in Figs. 14 and 15, which functions in the same manner as the top hat 40 described above, but has a slightly different shape. The top hat 160 is in the form of a generally cylindrical sleeve or body with a bore 164, shown in Fig. 12, extending between a first end 166 and a second end 168. An annular undercut 170 is formed in the top hat 160 adjacent to the first end 166 and forms a seat for a wire retainer described hereafter.

A plurality of discrete projections 172 extend outward from the body of the top hat 160. Each projections 172 slide within one of the windows 64 in the housing 32 to a limit axially movement of the top hat 160 within the bore 62 of the housing 32.

At least one or more projections 174, such as two by example only, projections 174 located on diametrically opposed portions of the top hat 160, as shown in Figs. 11, 12, and 14 project a short distance outward from the exterior surface of the adjoining portion of the top hat 160. Each projection 174 is in the form of a finger integrally formed with the body of the top hat 160 and disposed in a cut out or wi n-dow 176. The projections 174 engage the endform 20 when the endform 20 is mounted in the housing 32 and cause movement of the top hat 160 from the second position to the first position upon concurrent movement of the endform 20 during separation of the endform 20 from the housing 32.

In this aspect of the quick connector 150, a wire retainer 180, shown in Figs. 11-13 and 16, is formed of a resilient spring material with a pair of spaced legs 182 and 184 which are interconnected at one end by an end segment 186. Each of the legs 182 and 184 have an inward by extending projection or segment 188 and 190, respectively, which may have a linear or the arcuate shape shown in Figs. 13 and 16. The distance between the segments 188 and 190 are sized to be approximate by the same as the outer diameter of the longitudinal portion of the endform 20, but less than the outer diameter of the flange or bead 24.

The segments 188 and 190 may also be configured with a shape and/or spacing to engage the recess 140 in Fig. 10A.

Each leg 182 and 184 terminates in an engagement member 192 and 194, respectively. The engagement members 192 and 194 project angularly out of the common plane of the legs 182 and 184 and the end segment 186 and function in the same manner as the engagement members 124 and 126 on the retainer 42 described above.

The top hat 160, as shown in Fig. 12, has a recess adjacent the first end 166 forming an end lip 196 which extends across the one or more apertures 60 in the housing 32 when the top hat 160 is in the first position. This expands the legs 182 and 184 and prevents the segments 188 and 190 from extending through the aperture(s) 60 into the bore 62 in the housing 32 thereby enabling the enlarged flange 24 on the endform 20 to be unimpedingly inserted through the open end of the bore 62 into sealingly engagement within the housing 32.

However, axial movement of the top hat 160 through insertion engagement with the endform 20 moves the top hat 160 to the second position clearing the aperture(s) 60 from the end lip 196 in the top hat 160. This enables the segments 188 and 190 of the retainer 180 to retract radially inward through the aperture(s) 60 to the position shown in Figs. 13 and 16 in which the projections 188 and 190 snugly fit around the longitudinal portion of the endform 20 and engage the flange 24 to latch the endform 20 in the housing 32.

Squeezing the engagement members 192 and 194 together will cause expansion of the projections 188 and 190 radially outward sufficiently to enable separation of the endform 20 of the housing 32. During such separation, the projections 174 frictionally engage the endform 20 to axially slide or move the top hat 160 back to the first position shown in Fig. 12 and expand the retainer 180 for subsequent reinsertion of an endform 20 into the housing 32.

## Claims

1. A fluid quick connector (30) comprising:
an endform (20) having a shoulder;
a housing (32) having a bore extending from one end, the endform insertable into the bore through the one end;
at least one aperture formed in the housng;
a retainer (42)having at least one protrusion extendable through the aperture in the housing into engagement with the shoulder of the endform to latch the endform in the housing; and
a sleeve (40) mounted in the bore of the housing for movement between a first position and second position in response to engagement with the endform during insertion of the endform into the bore in the housing, in the first portion, the sleeve extending past the at least one aperture in the housing to hold the diameter of the retainer in a radially outward expanded state relative to a normal state of the retainer to enable insertion of the endform into the bore in the housing, and in the second position, the sleeve spaced from the at least one aperture in the housing allowing the at least one protrusion of the retainer to extend through the at least one aperture into engagement with the shoulder on the endform.

2. The fluid quick connector of claim1 wherein the shoulder of the endform comprises a radially enlarged flange.

3. The fluid quick connector of claim1 wherein the shoulder of the endform comprises a recessed groove.

4. The fluid quick connector of claim1 wherein:
the at least one protrusion on the retainer includes at least two circumferentially spaced protrusions; and
the at least one aperture in the housing includes at least two circumferentially spaced apertures.

5. The fluid quick connector of claim1 or 4 further comprising:
at least one another aperture formed in the housing spaced from the at least one first aperture; and
the sleeve including at least one projection movable within the at least one another aperture, the at least one projection and the at least one another aperture defining a limit of travel of the sleeve between at one of the first and second positions.

6. The fluid quick connector of claim 5 wherein:
the at least one projection on the sleeve includes at least two circumferentially spaced projections; and
the at least one another aperture in the housing includes at least two circumferentially spaced apertures.

7. The fluid quick connector of claim 1 wherein the sleeve further comprises:
an undercut carried on the sleeve for receiving the retainer.

8. The fluid quick connector of claim 1 wherein:
the retainer includes a ring portion, the at least one protrusion carried on the ring portion.

9. The fluid quick connector of claim 8 wherein:
the ring portion and the protrusion of the retainer lie in a common plane.

10. The fluid quick connector of claim 8 wherein the ring portion includes engagement means for changing the diameter of the ring portion.

11. The fluid quick connector of claim 10 wherein:
the ring portion lies in a first plane;
the engagement means extends out of the one plane.

12. The fluid quick connector of claim 10 wherein:
the engagement members are movable relative to each other to expand the diameter of the retainer to allow disengagement of the endform and the housing.

13. The fluid quick connector of claim 1 wherein:
the retainer includes a pair of movable legs interconnected by an end segment; and
the protrusion is carried on each leg.

14. The fluid quick connector of claim 1 wherein:
the endform includes an enlarged diameter flange spaced from a tip end;
the retainer includes an annular recess adjacent one end for receiving the annular flange on the endform within the recess when the endform is inserted into the bore in the housing.
